# EUROPEAN PATENT APPLICATION

(11) **EP 1 201 124 A2**
(43) Date of publication of application: **02.05.2002**
(21) Application number: 01203831.1
(22) Date of filing: 10.10.2001
(51) Int. Cl.: A01M 25/00, E05B 65/00, E05C 9/04

(54) **Device for locking the closing lid of containers for animal bait**

(30) Priority: 27.10.2000 IT MI002340
(71) Applicant: Arribox S.p.a., Sedriano (Milano) (IT)
(72) Inventor: Boni, Claudio, Cornaredo, MI (IT)
(74) Representative: Raimondi, Alfredo, Dott. Ing. Prof.

(57) **Abstract**

Device for locking the closing lid (30) of a container (10) for animal bait and the like, which comprises locking means (51,54,56) which are integral with a support plate (40) attached to said base and are movable relative thereto upon actuation of associated means (70,71) connected to an operating element (80) accessible by the operator, said locking means being suitable for engagement with corresponding slits (32) in the said lid (30) for locking the latter to the base (10).

## Description

The present invention relates to a device for locking the closing lid of a container for animal bait and the like.

In the art numerous embodiments of containers for poisoned bait intended for vermin such as mice and the like are known.

These include, in particular, those containers in which the closing lid of the container is not irreversibly fastened to the base of the container itself, for example by means of a hinge, but is separable therefrom for example in the axial direction.

Although performing their function, these containers with a separable lid nevertheless have the drawback that it is required to fit auxiliary means able to lock closure of the container by means of the associated lid so as to prevent opening thereof by children, pets and the like.

The technical problem which is posed, therefore, is that of providing a device for locking the closing lid of containers with bait for vermin such as mice and the like, which is extremely reliable, has a simple design and can be easily applied to containers of the known type without the need for major modification thereof.

Within the scope of this problem, a further requirement is that the device should be provided with operating means which are able to ensure a high degree of protection against involuntary opening and/or tampering by children or the like.

These technical problems are solved according to the present invention by a device for locking the closing lid of a container for animal bait and the like, which comprises locking means which are integral with a support plate attached to said base and are movable relative thereto upon actuation of associated means connected to an operating element accessible by the operator, said locking means being suitable for engagement with corresponding slits in the said lid for locking the latter to the base.

Further details may be obtained from the following description of a non-limiting example of embodiment of the invention, provided with reference to the accompanying plates of drawings in which:
- Figure 1 shows an exploded view of the container for bait, with the locking device according to the present invention;
- Figure 2 shows a partially sectioned view of the container according to Fig. 1;
- Figure 3 shows a schematic cross-section through the actuating gear of the closing device;
- Figure 4 shows a view of the opening for insertion of the operating means of the closing device;
- Figure 5 shows a perspective view of the actuating lever together with the operating key;
- Figure 6 shows a cross-section through the actuating lever with the operating key inserted;
- Figure 7 shows a partially sectioned view of the container with locking device in the unlocked position;
- Figure 8 shows a partial cross-section through the container with the device in the unlocked position and the lid raised;
- Figure 9 shows a partially sectioned view of the locking device in the locked position; and
- Figure 10 shows a partial cross-section through the container with the device in the position for locking of the fitted lid.

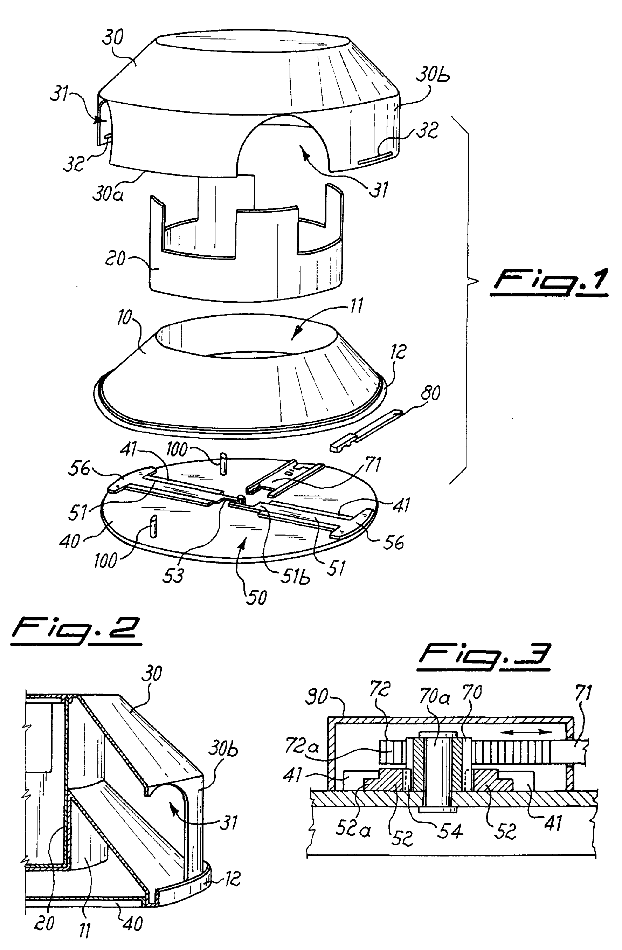

As illustrated in Fig. 1, the container for bait according to the present invention comprises a base 10 provided with a hollow seat 11 able to house the tray 20 containing the bait (not shown).

In a preferred embodiment, the base has a frustoconical shape with the larger base resting on the ground; said larger base is provided with a circular rim 12 having a U-shaped cross-section for insertion of the bottom edge 30a of a bell 30 forming the closing lid of the container.

The lateral surface 30b of the bell 30 is provided with suitable openings 31, able to allow the entry of the animal attracted by the bait, as well as slits 32 suitable for engagement with corresponding parts of the locking device 50, as will emerge more clearly.

The locking device 50 is integral with a support plate 40, forming also the bottom of the said base 10 to which the plate may be locked by screw-type or similar fixing means which are known per se and only schematically indicated in the figures by the reference number 100.

The locking device 50 comprises two sliders 51 which are substantially in the form of a T and slide on corresponding guides 41 of the support plate 40 by means of suitable shoulders 52a formed in the longitudinal direction on the shank 52 of the said T.

The free end 51b of the shank 52 of the T has an extension 53 which has a smaller width and has, formed on its internal surface, a rack 54 suitable for engagement with a toothed gear 70 arranged in a substantially central position of the plate 40.

The end 56 of the T provided with a head is able, instead, to be inserted into the said slit 32 of the bell so as to ensure the relative fastening of the bell and base.

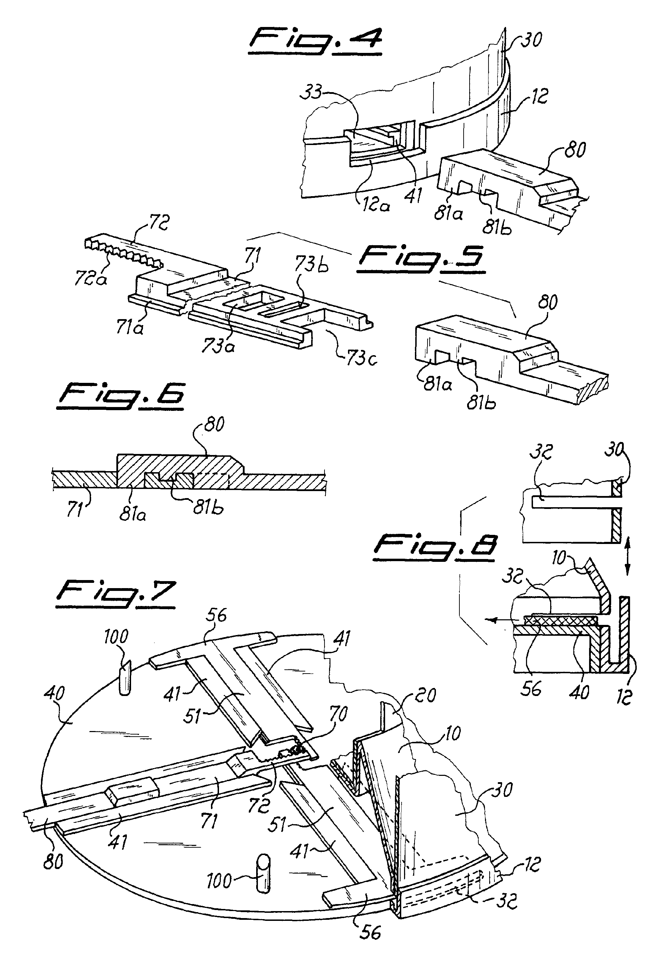

As illustrated in Fig. 3, the gear 70 is mounted idle on a pin 70a which is formed, for example, by means of moulding on the base 40 and around which it is able to rotate freely.

Although only two sliders arranged opposite each other are shown in the example illustrated, it is clear that the number of said sliders may vary from a minimum of one to a maximum number determined by the dimensions of the support plate and/or the sliders.

The linear movement of the two sliders is determined by the rotation of the gear 70 which can be actuated by means of an actuating bar 71 in turn able to perform a translatory movement in both directions on respective guides 41 which are integral with the plate 40 and to which it is axially constrained by means of associated shoulders 71a.

One of the two ends of the actuating bar 71 has an extension 72 which has a smaller width and on the internal surface of which a rack 72a suitable for engagement with the gear 70 is formed.

The other end of the actuating bar has, instead, two seats 73a and 73b with a different configuration, which are able to form the seat for insertion, in the axial direction, of corresponding projections 81a,81b of an operating key 80 of the device, which in this way may be fitted to/separated from the device according to requirements.

In a preferred embodiment said seats 73a,73b have inclined transverse sides for facilitating insertion/disengagement of a single key 80 specially designed and coded by means of the projections 81a,81b. As illustrated in Fig. 4, the key 80 may be inserted inside the container via an associated hole formed by an opening 33 in the bell 30 which is angularly arranged opposite the end of the guides 41 of the actuating bar 71 of the device and an additional seat 12a of the annular edge 12 of the base 10.

In order to allow insertion/removal of the key and relative engagement/disengagement between the latter and the operating element 80, the height of the openings 33,12a is suitably about twice the size of the thickness of the key.

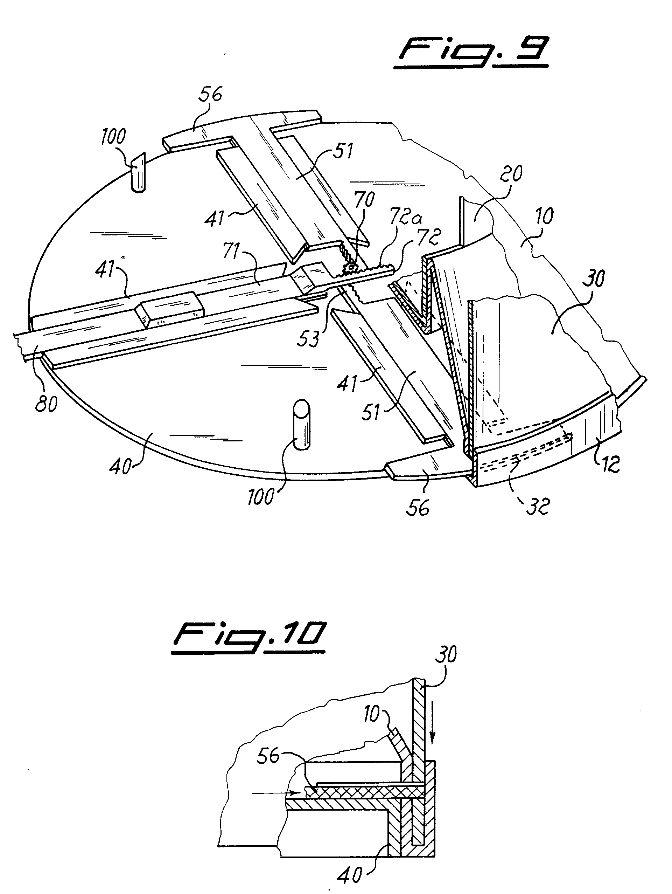

The operating principle of the locking device is as follows:
- after attaching the bottom 40 to the base 10, inserting the tray 20 into its seat 11 and positioning the bell 30 on the base 10, the sole relative angular position of bell and base is located so that the free edge 30a enters into the annular groove 12 and the hole 33 is arranged opposite the guides 41 of the actuating bar 71 and the seat 12a of the base 10: in this position the slits 32 will be located facing the head 56 of the T of the locking sliders 51;
- in this initial condition the actuating bar 71 is translated outwards and, correspondingly, the two locking sliders 51 are translated towards the gear 55 so that the said head of the T remains inside the diameter of the support plate (Figs. 7 and 8), allowing resting or raising of the bell 30;
- by inserting the operating key 80 into the hole 33 and lowering it towards the actuating bar 71, the projections 81a,81b of the former are engaged with the associated seats 73a,73b of the latter, so as to produce the relative fastening which allows the operator to push/pull the actuating element inwards/outwards so as to cause a corresponding rotation of the gear 54 in the clockwise/anti-clockwise direction, causing the outwards translatory movement of the two sliders 51, resulting in the insertion of their heads into the slits 33 of the bell, which thus remains locked to the base.

In a preferred embodiment, said locking is performed with the actuating element pushed towards the centre of the plate so that the subsequent extraction of the key keeps the fastening seats of the actuating element at a distance from the inlet opening for the key so as to prevent incorrect operation of the said locking device. Although shown in the example with locking sliders which are movable translationwise, it is envisaged that the device according to the invention may be similarly actuated with sliders which are able to perform a rotational or rotary-translation movement; in this case said sliders will be configured in the form of a cam, the rotation/rotary translation of which produces them the movement of a part thereof away from/back towards the diameter of the support plate and the consequent engagement/disengagement into/from the slits 32 of the lid 30.

Similarly the gear actuating rack may be formed on a curved instead of a straight surface.

It is envisaged, moreover, that the zone of the gear 70 is protected by a lid 90 which is suitably shaped and provided with openings for receiving the sliders 51 and the actuating bar 71.

## Claims

1. Device for locking the closing lid (30) of a container (10) for animal bait and the like, **characterized in that** it comprises locking means (51,54,56) which are integral with a support plate (40) attached to said base and are movable relative thereto upon actuation of associated means (70,71) connected to an operating element (80) accessible by the operator, said locking means being suitable for engagement with corresponding slits (32) in the said lid (30) for locking the latter to the base (10).

2. Device according to Claim 1, **characterized in that** pairs of guides (41) for retaining said locking means (51,54,56) in the axial direction are provided on said base (40).

3. Device according to Claim 1, **characterized in that** said locking means consist of sliders (51) provided with longitudinal shoulders (52) for engagement with said guides (41) of the plate (40).

4. Device according to Claim 1, **characterized in that** said sliders (51) have a part formed in the manner of a head (56) suitable for insertion into a corresponding slit (32) of the lid (30).

5. Device according to Claim 1, **characterized in that** said sliders have an end formed in the manner of a rack (54a) suitable for engagement with said actuating means (70).

6. Device according to Claim 1, **characterized in that** locking means are movable translationwise.

7. Device according to Claim 1, **characterized in that** said locking means are movable rotationally.

8. Device according to Claim 1, **characterized in that** said actuating means consist of a gear (70) integral with the base (40) and idle with respect thereto, said gear being engaged with a rack (72a) of an actuating bar (71).

9. Device according to Claim 8, **characterized in that** said actuating bar (71) is movable translationwise.

10. Device according to Claim 8, **characterized in that** said actuating bar is movable rotationally.

11. Device according to Claim 8, **characterized in that** said actuating bar (71) has at least one seat (71a,71b).

12. Device according to Claim 11, **characterized in that** said at least one seat (73a,73b) has inclined transverse sides.

13. Device according to Claim 1, **characterized in that** said operating element (80) has at least one projection (81a,81b) suitable for insertion in said at least one seat of the actuating bar (71).

14. Device according to Claim 1, **characterized in that** said lid (30) and said base (10) have a respective opening (33) and seat (12a) arranged in a corresponding angular position so as to form a hole for insertion of the operating element (80).

15. Device according to Claim 14, **characterized in that** the axial height of said hole (33,12a) is about twice the thickness of the operating element (80).

16. Device according to Claim 1, **characterized in that**, in the locking position, the seats (71a,71b) of the actuating slider are closer to the central gear than to the outer edge of the container.

17. Device according to Claim 1, **characterized in that** said container is circular.

18. Device according to Claim 1, **characterized in that** it comprises a lid (90) for protection of the zone of the gear (70), which lid is provided with openings for receiving locking means (51) and the actuating bar (71).
